# EUROPEAN PATENT APPLICATION

(11) **EP 4 730 406 A1**
(43) Date of publication of application: **22.04.2026**
(21) Application number: 24868785.7
(22) Date of filing: 19.09.2024
(51) Int. Cl.: H01M 4/04, B65H 23/26, B30B 3/04

(54) **ELECTRODE MANUFACTURING DEVICE AND ELECTRODE MANUFACTURING METHOD USING SAME**

(30) Priority: 21.09.2023 KR 20230126163
(71) Applicant: LG Energy Solution, Ltd., Seoul 07335 (KR)
(72) Inventor: KIM, Jeong Hui, Daejeon 34122 (KR); KOO, Jae Pil, Daejeon 34122 (KR); JANG, Yeong Cheol, Daejeon 34122 (KR); LIM, Hee Young, Daejeon 34122 (KR); EOM, Do Geon, Daejeon 34122 (KR)
(74) Representative: Plasseraud IP
(86) International application number: PCT/KR2024/096162
(87) International publication number: WO 2025/063811

(57) **Abstract**

The present technology provides an electrode manufacturing apparatus including an unwinder around which an electrode sheet is wound, a rewinder configured to recover and wind the electrode sheet, a plurality of guide rolls configured to guide the electrode sheet to be moved between the unwinder and the rewinder, a rolling device provided between the unwinder and the rewinder, and including an upper rolling roll and a lower rolling roll that are configured to roll the electrode sheet, and a conveyor transfer device configured to move a connection sheet attached to one of two parts of the electrode sheet that are separated from each other, in which the conveyor transfer device is configured to move the connection sheet through a rolling gap between the upper rolling roll and the lower rolling roll.

## Description

### [Technical Field]

The present invention relates to an electrode manufacturing apparatus and an electrode manufacturing method using the same, and more particularly, to an electrode manufacturing apparatus for manufacturing electrodes of a secondary battery and an electrode manufacturing method using the electrode manufacturing apparatus.

This application claims the benefit of priority based on Korean Patent Application No. 10-2023-0126163, filed on September 21, 2023, and the entire content of the Korean patent application is incorporated herein by reference.

### [Background Art]

With the development of technologies of mobile devices and an increase of the demand for mobile devices, the demand for secondary batteries is sharply increasing. Among secondary batteries, lithium secondary batteries have been widely used as energy sources of various types of electronic products as well as various types of mobile devices in terms of high energy density, a high operating voltage, and excellent preservation and lifespan characteristics thereof. Recently, as the field of application of secondary batteries expands, the demand for higher-capacity secondary batteries is increasing rapidly.

Generally, to manufacture a secondary battery, an electrode sheet is manufactured by coating a current collector with an electrode active material, and a subsequent process is performed on the electrode sheet. Because a thickness of the electrode sheet is small, the electrode sheet is likely to be broken during the handling of the electrode sheet. When the electrode sheet is broken, a process is resumed on the electrode sheet after manually connecting two separated parts of the electrode sheet.

### [Disclosure]

### [Technical Problem]

The present invention is directed to providing an electrode manufacturing apparatus.

The present invention is also directed to providing an electrode manufacturing method.

### [Technical Solution]

An aspect of the present invention provides an electrode manufacturing apparatus including an unwinder around which an electrode sheet is wound, a rewinder configured to recover and wind the electrode sheet, a plurality of guide rolls configured to guide the electrode sheet to be moved between the unwinder and the rewinder, a rolling device provided between the unwinder and the rewinder, and including an upper rolling roll and a lower rolling roll that are configured to roll the electrode sheet, and a conveyor transfer device configured to move a connection sheet attached to one of two parts of the electrode sheet that are separated from each other, in which the conveyor transfer device is configured to move the connection sheet through a rolling gap between the upper rolling roll and the lower rolling roll.

In example embodiments, the conveyor transfer device may include a plurality of conveyor rolls, and a conveyor belt configured to be moved while being guided by the plurality of conveyor rolls, the connection sheet may be attached to the conveyor belt, and the connection sheet may be moved together with the part of the electrode sheet attached to the connection sheet during the movement of the conveyor belt.

In example embodiments, the plurality of conveyor rolls may be installed on rotation shafts of the plurality of guide rolls.

In example embodiments, each of the plurality of conveyor rolls may be configured to rotate independently of a rotation of a rotation shaft of a corresponding guide roll among the plurality of guide rolls.

In example embodiments, each of the plurality of conveyor rolls may be installed on a side of a rotation shaft of a corresponding guide roll among the plurality of guide rolls.

In example embodiments, the plurality of guide rolls may include at least one guide roll between the unwinder and the rolling device and at least one guide roll between the rewinder and the rolling device.

In example embodiments, the conveyor transfer device may further include a driving pulley configured to move the conveyor belt.

In example embodiments, the electrode manufacturing apparatus may further include a cutter configured to cut the connection sheet to separate the connection sheet from the conveyor belt.

In example embodiments, the rolling device may be configured to move at least one of the upper rolling roll and the lower rolling roll to adjust the rolling gap.

In example embodiments, the rolling device may be configured to adjust the rolling gap to be in a range between a first gap for pressing the electrode sheet by the upper and lower rolling rolls and a second gap greater than the first gap, and may maintain the rolling gap to be the second gap while the connection sheet is moved through the rolling gap by the conveyor transfer device.

An aspect of the present invention provides an electrode manufacturing method including performing a rework operation to connect a first part and a second part of an electrode sheet, which are separated from each other, by a connection sheet, and rolling the electrode sheet by moving the electrode sheet including the connection sheet through a rolling gap between an upper rolling roll and a lower rolling roll, in which the performing of the rework operation includes attaching the connection sheet to the first part of the electrode sheet and a conveyor belt and moving the conveyor belt to move the connection sheet through the rolling gap.

In example embodiments, after the moving of the connection sheet, the performing of the rework operation may further include attaching the connection sheet to the second part of the electrode sheet, and separating the connection sheet from the conveyor belt.

In example embodiments, before the moving of the connection sheet, the performing of the rework operation may further include increasing the rolling gap from a first gap to a second gap, and the second gap may be greater than a thickness of the connection sheet.

In example embodiments, the rolling of the electrode sheet may include adjusting the rolling gap from the second gap to the first gap.

In example embodiments, the electrode sheet may be configured to be moved while being guided by a plurality of guide rolls between an unwinder and a rewinder, a plurality of conveyor rolls configured to guide movement of the conveyor belt may be installed on rotation shafts of the plurality of guide rolls, and each of the plurality of conveyor rolls may be configured to rotate independently of a rotation of a rotation shaft of a corresponding guide roll among the plurality of guide rolls.

### [Advantageous Effects]

According to example embodiments of the present invention, a rework operation performed on an electrode sheet to connect two parts of the electrode sheet, which are separated from each other due to the breakage of the electrode sheet, by a connection sheet can be automated. By automating the rework operation for the electrode sheet, an operator's safety accident can be prevented and the productivity of an electrode manufacturing process including the rework operation on the electrode sheet can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1A is a plan view of an electrode manufacturing apparatus according to embodiments of the present invention.
FIG. 1B is a cross-sectional view of the electrode manufacturing apparatus taken along line BB-BB' of FIG. 1A.
FIG. 1C is a cross-sectional view of the electrode manufacturing apparatus taken along line CC-CC' of FIG. 1A.
FIG. 2 is a flowchart of an electrode manufacturing method according to embodiments of the present invention.
FIGS. 3A to 9B are diagrams illustrating an electrode manufacturing method according to embodiments of the present invention.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

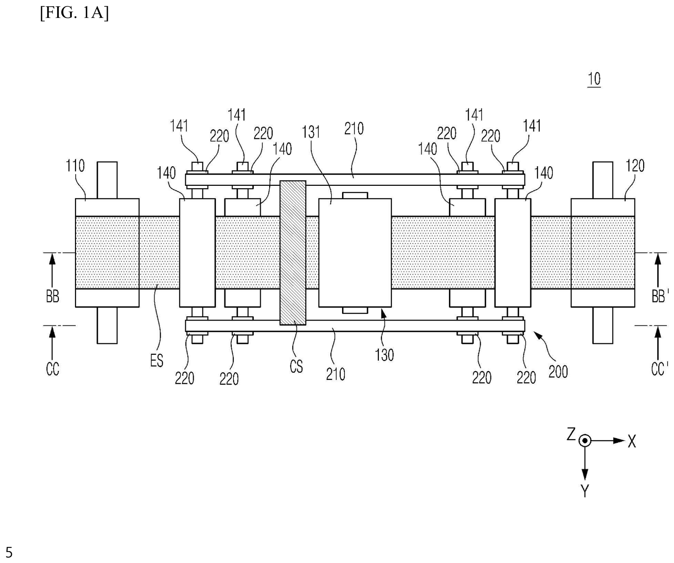

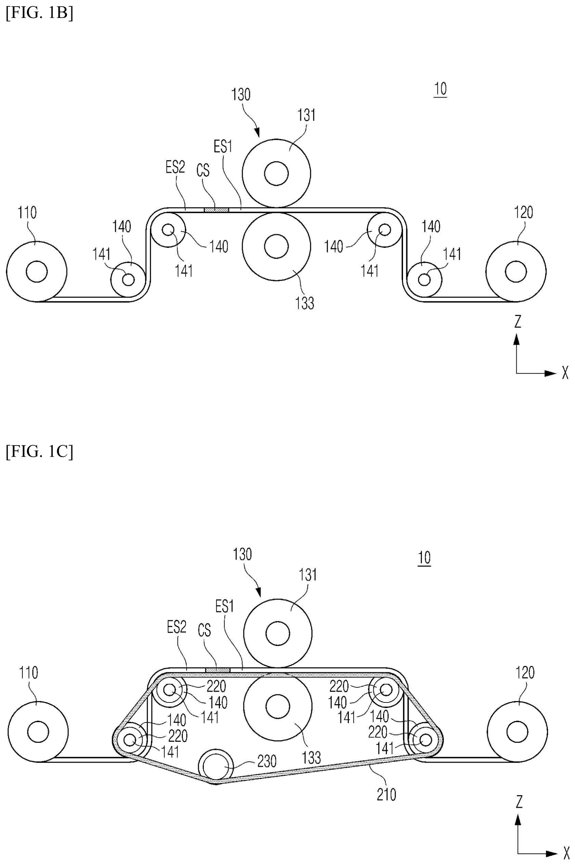

FIG. 1A is a plan view of an electrode manufacturing apparatus 10 according to embodiments of the present invention. FIG. 1B is a cross-sectional view of the electrode manufacturing apparatus 10 taken along line BB-BB' of FIG. 1A. FIG. 1C is a cross-sectional view of the electrode manufacturing apparatus 10 taken along line CC-CC' of FIG. 1A.

Referring to FIGS. 1A to 1C, the electrode manufacturing apparatus 10 may be configured to roll an electrode sheet ES. The electrode manufacturing apparatus 10 may be configured to perform a rolling process to manufacture electrodes of a secondary battery. The electrode sheet ES may include a substrate and an electrode slurry layer applied to at least one of opposite surfaces of the substrate. The substrate may include a current collector, for example, copper or aluminum. The electrode slurry layer may include a positive electrode active material or a negative electrode active material. The electrode manufacturing apparatus 10 may perform the rolling process to press the electrode slurry layer such that the electrode slurry layer applied on at least one of the opposite surfaces of the substrate is flat.

Furthermore, the electrode manufacturing apparatus 10 may be configured to perform a rework operation on the electrode sheet ES to connect two parts (i.e., a first part ES1 and a second part ES2) of the electrode sheet ES using a connection sheet CS when the electrode sheet ES is broken into the two parts. The connection sheet CS may include, for example, a polyethylene terephthalate (PET) film.

The electrode manufacturing apparatus 10 may include an unwinder 110, a rewinder 120, a rolling device 130, and a plurality of guide rolls 140.

The electrode sheet ES may extend between the unwinder 110 and the rewinder 120. The electrode sheet ES may be provided while being wound around the unwinder 110. The electrode sheet ES supplied from the unwinder 110 may be moved along a predetermined moving path and recovered by the rewinder 120. The rewinder 120 may rotate to wind the electrode sheet ES. The rewinder 120 may rotate in synchronization with the rotation of the unwinder 110. The rewinder 120 and the unwinder 110 may be each connected to a driving motor and configured to rotate about a rotation shaft by a driving force provided by the driving motor. Hereinafter, moving the electrode sheet ES and/or the connection sheet CS forward may be understood as moving the electrode sheet ES and/or the connection sheet CS in a direction toward the rewinder 120 from the unwinder 110, and moving the electrode sheet ES and/or the connection sheet CS backward may be understood as moving the electrode sheet ES and/or the connection sheet CS in a direction toward the unwinder 110 from the rewinder 120.

The plurality of guide rolls 140 may be provided in the moving path of the electrode sheet ES between the rewinder 120 and the unwinder 110. The plurality of guide rolls 140 may guide the electrode sheet ES to be moved along the predetermined moving path. Each of the guide rolls 140 may include a rotation shaft 141, and a roll body that rotates about the rotation shaft 141 and is configured to be in contact with the electrode sheet ES. The plurality of guide rolls 140 may include at least one guide roll 140 between the rolling device 130 and the unwinder 110 and at least one guide roll 140 between the rolling device 130 and the rewinder 120. Although FIGS. 1A to 1C illustrate that the electrode manufacturing apparatus 10 includes four guide rolls 140, embodiments are not limited thereto and the electrode manufacturing apparatus 10 may include several to dozens of guide rolls 140.

The rolling device 130 may be provided between the unwinder 110 and the rewinder 120. The rolling device 130 may perform the rolling process on the electrode sheet ES. The rolling device 130 may include an upper rolling roll 131 and a lower rolling roll 133. Each of the upper rolling roll 131 and the lower rolling roll 133 may be configured to rotate about a rotation shaft. The upper rolling roll 131 and the lower rolling roll 133 may be spaced apart from each other in a vertical direction (e.g., a Z-axis direction) with a rolling gap therebetween. The rolling gap is a space defined between the upper rolling roll 131 and the lower rolling roll 133, and the electrode sheet ES may be moved through the rolling gap. Hereinafter, the front of the rolling device 130 may refer to a direction from the rolling device 130 toward the rewinder 120 and the rear thereof may refer to a direction from the rolling device 130 toward the unwinder 110.

The rolling device 130 may be configured to adjust the rolling gap between the upper rolling roll 131 and the lower rolling roll 133. The rolling gap may be understood as a distance between the upper rolling roll 131 and the lower rolling roll 133 in the vertical direction (e.g., the Z-axis direction). The rolling device 130 may adjust the rolling gap by moving at least one of the upper rolling roll 131 and the lower rolling roll 133 in the vertical direction (e.g., the Z-axis direction).

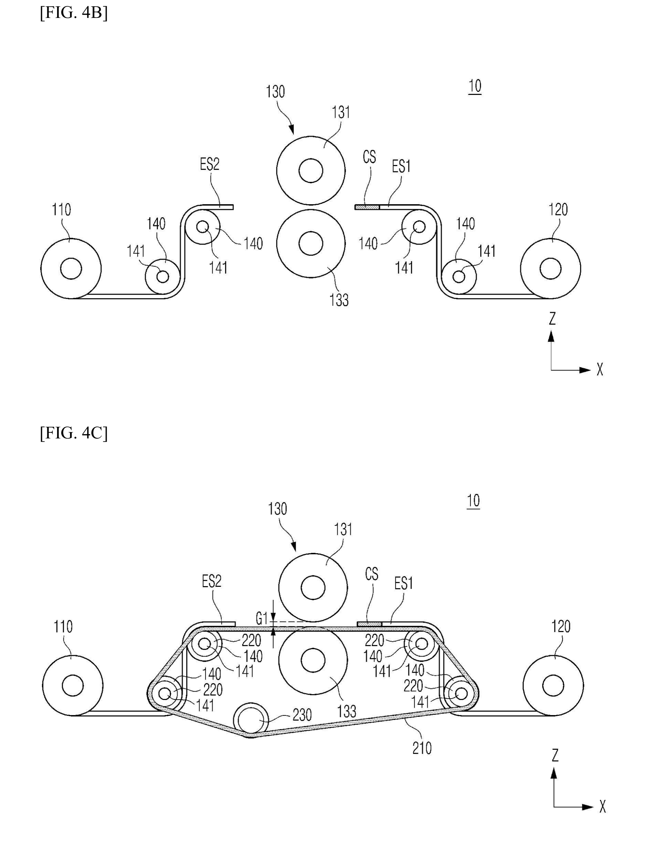

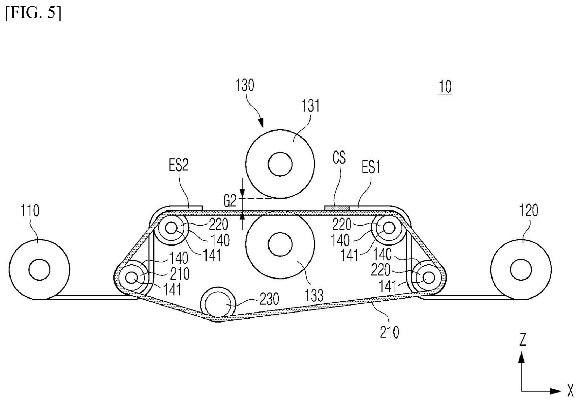

In example embodiments, the rolling device 130 may be configured to adjust the rolling gap to be in a range between a first gap G1 (see FIG. 4C) for pressing the electrode sheet ES by the upper rolling roll 131 and the lower rolling roll 133 and a second gap G2 (see FIG. 5) greater than the first gap. While the rolling process is performed on the electrode sheet ES by pressing the electrode sheet ES by the upper rolling roll 131 and the lower rolling roll 133, the rolling device 130 may maintain the rolling gap to be the first gap. During the rework operation of connecting two separated parts of the electrode sheet ES using the connection sheet CS, the rolling device 130 may maintain the rolling gap to be the second gap.

The electrode manufacturing apparatus 10 may include a conveyor transfer device 200 configured to move the connection sheet CS during the performance of the rework operation on the electrode sheet ES.

The conveyor transfer device 200 may move the connection sheet CS, which is attached to one of the first and second parts ES1 and ES2 of the electrode sheet ES, through the rolling gap between the upper and lower rolling rolls 131 and 133. The conveyor transfer device 200 may move the connection sheet CS forward and/or backward so that the connection sheet CS may pass through the rolling gap between the upper rolling roll 131 and the lower rolling roll 133. When the connection sheet CS is moved by the conveyor transfer device 200, a part (the first part ES1 or the second part ES2) of the electrode sheet ES attached to the connection sheet CS may be moved forward or backward together with the connection sheet CS.

The conveyor transfer device 200 may include a conveyor belt 210, a plurality of conveyor rolls 220, and a driving pulley 230.

The conveyor belt 210 may be moved along a path provided by the plurality of conveyor rolls 220. A moving path of the conveyor belt 210 may have a closed-loop form. The plurality of conveyor rolls 220 may be configured to rotate, and guide the conveyor belt 210 to be moved along a predetermined moving path. Each of the conveyor rolls 220 may include a roller, a cogwheel, a gear, or a drum.

The conveyor belt 210 may be spaced apart from the electrode sheet ES in a horizontal direction (e.g., a Y-axis direction) not to interfere with the moving path of the electrode sheet ES.

The driving pulley 230 may be provided in the moving path of the conveyor belt 210 and configured to move the conveyor belt 210. The driving pulley 230 may include a driving motor to generate a driving force for moving the conveyor belt 210. In some example embodiments, the conveyor transfer device 200 may include a handle for moving the conveyor belt 210. When an operator rotates the handle, a drive shaft connected to the handle may rotate, and the conveyor belt 210 may be moved while being engaged with the drive shaft that is rotating.

The conveyor transfer device 200 may include a pair of conveyor belts 210 spaced apart from each other in the horizontal direction (e.g., the Y-axis direction) with the electrode sheet ES therebetween. The pair of conveyor belts 210 may be moved along a moving path provided by the plurality of conveyor rolls 220. The conveyor belt 210 may be spaced apart from the electrode sheet ES in the horizontal direction (e.g., the Y-axis direction) such that the pair of conveyor belts 210 do not interfere with the moving path of the electrode sheet ES. When the connection sheet CS is moved forward or backward to perform the rework operation on the electrode sheet ES, the connection sheet CS is attached to the pair of conveyor belts 210, and a part (the first part ES1 or the second part ES2) of the electrode sheet ES attached to the connection sheet CS may be moved forward or backward together with the connection sheet CS.

When the electrode sheet ES is broken due to stress applied by the rolling device 130, the first part ES1 of the electrode sheet ES may be on one side of the rolling device 130 (i.e., the rear of the rolling device 130), and the second part ES2 of the electrode sheet ES may be on another side of the rolling device 130 (i.e., the front of the rolling device 130). The performance of the rework operation on the electrode sheet ES may include attaching the connection sheet CS to the conveyor belt 210 and one end of the electrode sheet ES (e.g., an end of the first part ES1 of the electrode sheet ES), moving the conveyor belt 210 to move the connection sheet CS forward or backward such that the connection sheet CS approaches another end of the electrode sheet ES (e.g., an end of the second part ES2 of the electrode sheet ES), and attaching the connection sheet CS to the another end of the electrode sheet ES. When the connection sheet CS is moved forward or backward by the conveyor belt 210, the part of the electrode sheet ES attached to the connection sheet CS is moved forward or backward together with the connection sheet CS, and the other part of the electrode sheet ES that is not attached to the connection sheet CS is stopped.

In example embodiments, the plurality of conveyor rolls 220 may be installed on the rotary shafts 141 of the plurality of guide rolls 140. Each of the plurality of conveyor rolls 220 may be installed on a side of the rotation shaft 141 of a corresponding guide roll 140 among the plurality of guide rolls 140. For example, when the rotation shaft 141 of each of the guide rolls 140 includes a central part equipped with a roll body in contact with the electrode sheet ES, each of the conveyor rolls 220 may be installed on both sides of each of the guide rolls 140, which are spaced apart from each other with the central part thereof therebetween. By installing the conveyor rolls 220 of the conveyor transfer device 200 on the rotating shafts 141 of the plurality of guide rolls 140, the number of components of the conveyor transfer device 200 may be reduced to reduce costs and the conveyor transfer device 200 may be more easily installed.

In example embodiments, each of the plurality of conveyor rolls 220 may be configured to rotate independently of the rotation shaft 141 of the corresponding guide roll 140 among the plurality of guide rolls 140. That is, each of the conveyor rolls 220 may rotate regardless of the rotation of the rotation shaft 141 of the corresponding guide roll 140. For example, when the connection sheet CS is moved (e.g., forward or backward) to perform the rework operation on the electrode sheet ES, the plurality of conveyor rolls 220 related to the movement of the conveyor belt 210 may rotate but the rotation shafts 141 of the plurality of guide rolls 140 may remain stationary without rotating. For example, when the rolling process is performed on the electrode sheet ES by moving the electrode sheet ES forward, the rotation shafts 141 of the plurality of guide rolls 140 related to the movement of the electrode sheet ES may rotate but the plurality of conveyor rolls 220 related to the movement of the conveyor belt 210 may remain stationary without rotating.

### (Second Embodiment)

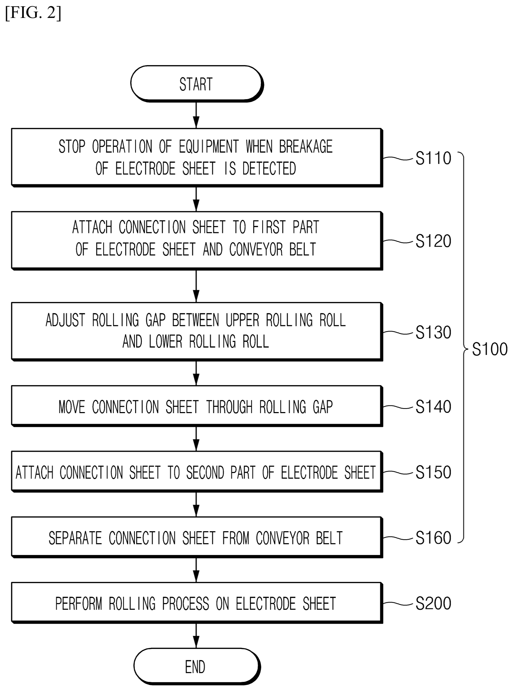

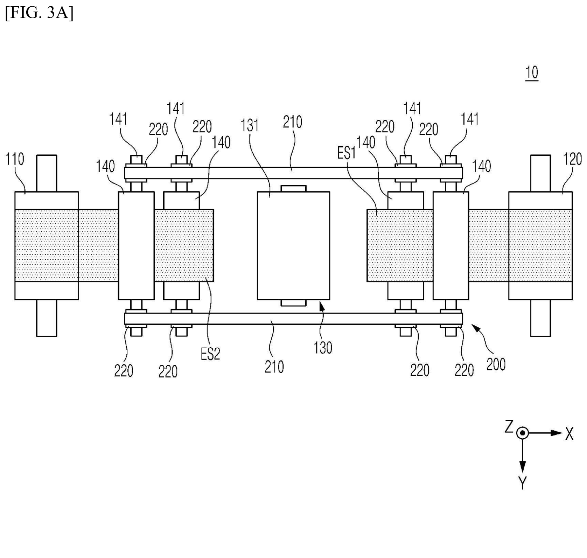

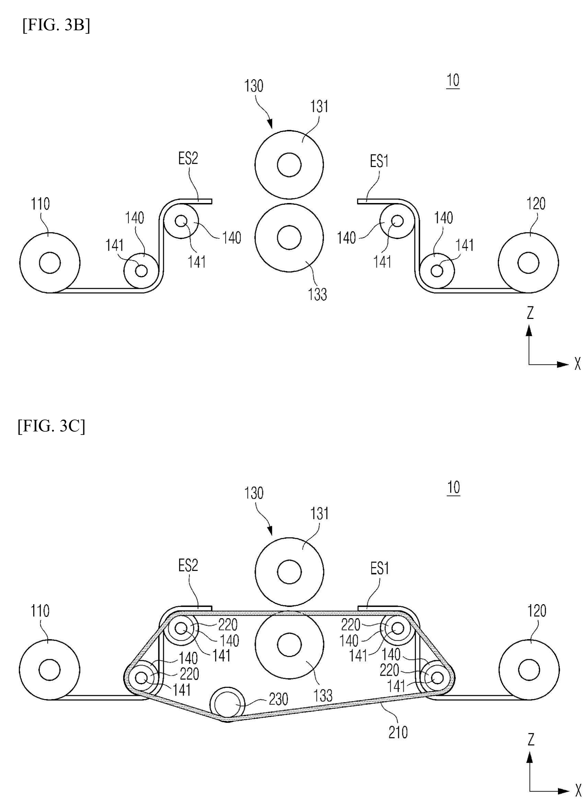

FIG. 2 is a flowchart of an electrode manufacturing method according to embodiments of the present invention. FIGS. 3A to 9B are diagrams illustrating an electrode manufacturing method according to embodiments of the present invention. FIGS. 3A, 4A, 7A, 8 and 9A are plan views of the electrode manufacturing apparatus 10. FIGS. 3B, 4B, 6B, 7B and 9B are cross-sectional views of the electrode manufacturing apparatus 10 taken along line BB-BB' of FIG. 1A. FIGS. 3C, 4C, 5, 6C, and 7C are cross-sectional views of the electrode manufacturing apparatus 10 taken along line CC-CC' of FIG. 1A.

Referring to FIG. 2, the electrode manufacturing method may include performing the rework operation on the electrode sheet ES that is broken (S100), and performing the rolling process on the electrode sheet ES on which the rework operation is completed (S200). The performing of the rework operation (S100) may include stopping the operation of equipment when the breakage of the electrode sheet ES is detected (S110), attaching the connection sheet CS to the first part ES1 of the electrode sheet ES and the conveyor belt 210 (S120), adjusting the rolling gap between the upper and lower rolling rolls 131 and 133 (S130), moving the connection sheet CS through the rolling gap between the upper and lower rolling rolls 131 and 133 (S140), attaching the connection sheet CS to the second part ES2 of the electrode sheet ES (S150), and separating the connection sheet CS from the conveyor belt 210 (S160).

Hereinafter, an electrode manufacturing method using the electrode manufacturing apparatus 10 described above with reference to FIGS. 1A to 1C will be described in more detail with reference to FIGS. 2 to 9B.

Referring to FIGS. 3A to 3C, when the breakage of the electrode sheet ES is detected, the operation of the equipment is stopped (S110).

In operation S110, when the electrode sheet ES is broken due to stress applied by the rolling device 130, the electrode sheet ES is divided into the first part ES1 and the second part ES2. In this case, the first part ES1 of the electrode sheet ES may be located behind the rolling device 130, and the second part ES2 of the electrode sheet ES may be located in front of the rolling device 130. For example, the breakage of the electrode sheet ES may be detected based on a signal output from a tension sensor configured to detect tension on the electrode sheet ES or a signal output from a camera configured to capture an image of the electrode sheet ES.

In operation S110, the operation of the equipment is stopped as soon as the breakage of the electrode sheet ES is detected. As the operation of the equipment is stopped, the operations of the unwinder 110, the rewinder 120, the upper rolling roll 131 and the lower rolling roll 133 of the rolling device 130, and the like may be stopped.

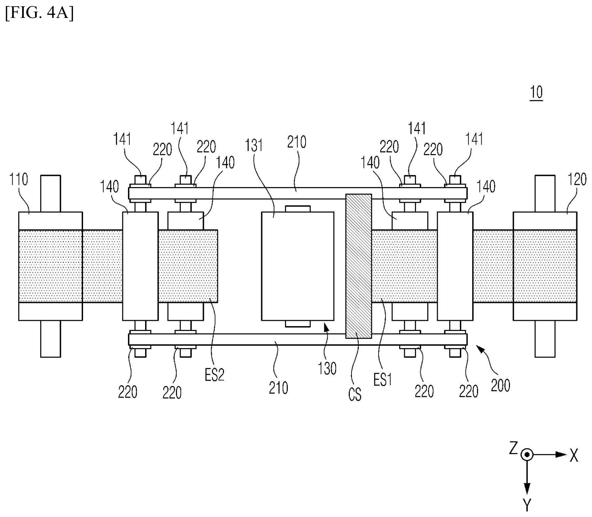

Referring to FIGS. 4A to 4C, the connection sheet CS is attached to the first part ES1 of the electrode sheet ES and the conveyor belt 210 (S120).

In operation S120, the connection sheet CS may be attached and fixed to the first part ES1 of the electrode sheet ES and the conveyor belt 210 by an adhesive member such as a tape. Alternatively, the connection sheet CS may have adhesive property and thus may be attached to the first part ES1 of the electrode sheet ES and the conveyor belt 210 without an adhesive medium.

In example embodiments, operation S120 may be performed by an attachment device for attaching the connection sheet CS to the first part ES1 of the electrode sheet ES and the conveyor belt 210. For example, the attachment device may include gripper fingers for gripping and moving the connection sheet CS and the electrode sheet ES, and a tape supply for providing an adhesive member between the connection sheet CS and the electrode sheet ES. In example embodiments, operation S120 may be performed manually.

Referring to FIG. 5, the rolling gap between the upper rolling roll 131 and the lower rolling roll 133 is adjusted (S130).

In operation S130, the rolling device 130 may adjust the rolling gap from the first gap G1 of FIG. 4C for pressing the electrode sheet ES by the upper and lower rolling rolls 131 and 133 to the second gap G2 greater than the first gap G1. The second gap G2 may be greater than a thickness of the connection sheet CS and a thickness of the electrode sheet ES. When the rolling gap is maintained to be the second gap G2, the connection sheet CS and the first part ES1 of the electrode sheet ES may be prevented from being strongly rubbed against the upper and lower rolling rolls 131 and 133 during the movement of the connection sheet CS and the first part ES1 of the electrode sheet ES through the rolling gap in a subsequent process.

FIG. 5 illustrates that the upper rolling roll 131 is moved upward to adjust the rolling gap from the first gap G1 to the second gap G2. In some embodiments, the rolling gap may be adjusted from the first gap G1 to the second gap G2 by moving the lower rolling roll 133 downward or moving the upper rolling roll 131 upward and the lower rolling roll 133 downward.

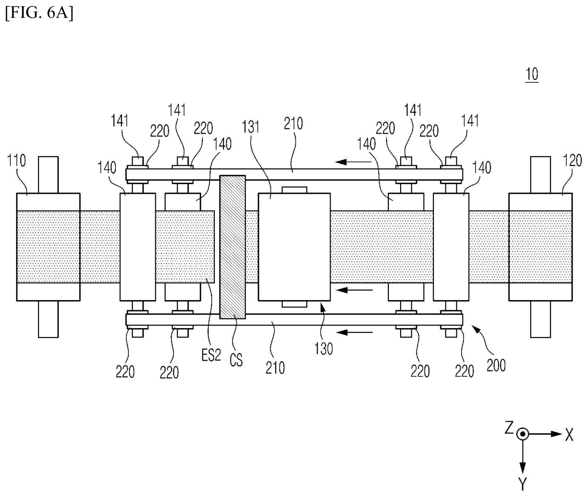

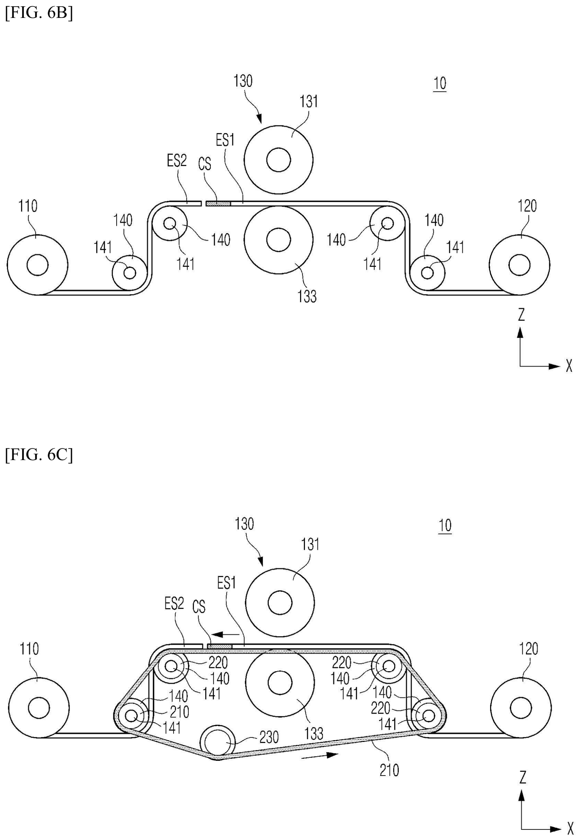

Referring to FIGS. 6A to 6C, the connection sheet CS is moved through the rolling gap between the upper rolling roll 131 and the lower rolling roll 133 (S140).

In operation S140, the conveyor belt 210 to which the connection sheet CS is fixed may be moved to move the connection sheet CS toward the second part ES2 of the electrode sheet ES in front of the rolling device 130. When the connection sheet CS is moved backward by the conveyor belt 210, the connection sheet CS and the first part ES1 of the electrode sheet ES attached thereto are moved backward through the rolling gap. Because the plurality of conveyor rolls 220 rotate regardless of the rotation of the rotation shafts 141 of the plurality of guide rolls 140, the plurality of guide rolls 140 may be maintained stationary while the conveyor belt 210 is moved to move the connection sheet CS.

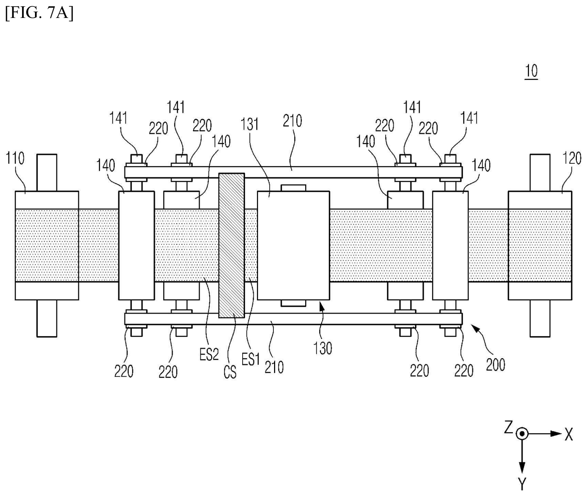

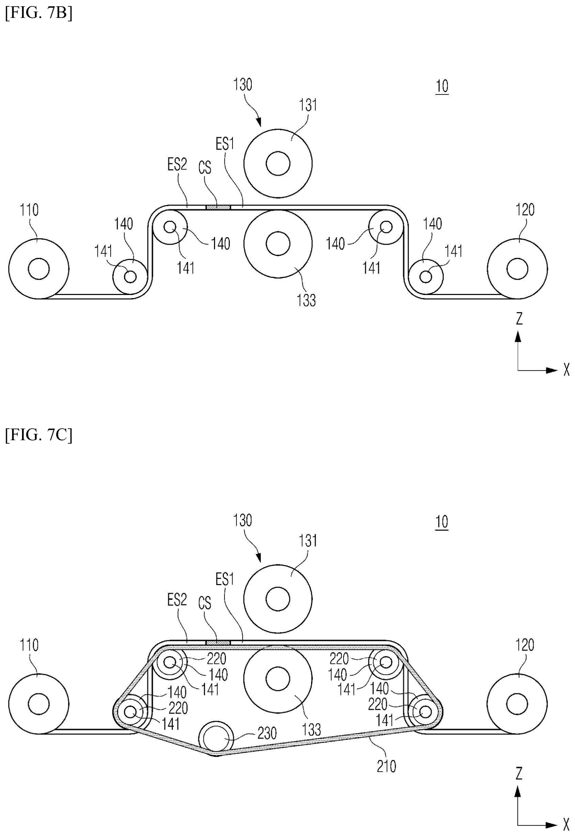

Referring to FIGS. 7A to 7C, the connection sheet CS is attached to the second part ES2 of the electrode sheet ES (S150). After the connection sheet CS is attached to the second part ES2 of the electrode sheet ES, the first part ES1 and the second part ES2 of the electrode sheet ES may be connected through the connection sheet CS.

In operation S150, the connection sheet CS may be attached and fixed to the second part ES2 of the electrode sheet ES by an adhesive member such as a tape. Alternatively, the connection sheet CS may have adhesive property and thus may be attached to the second part ES2 of the electrode sheet ES without an adhesive medium. In example embodiments, operation S150 may be performed by the attachment device configured to perform operation S120. In example embodiments, operation S150 may be performed manually.

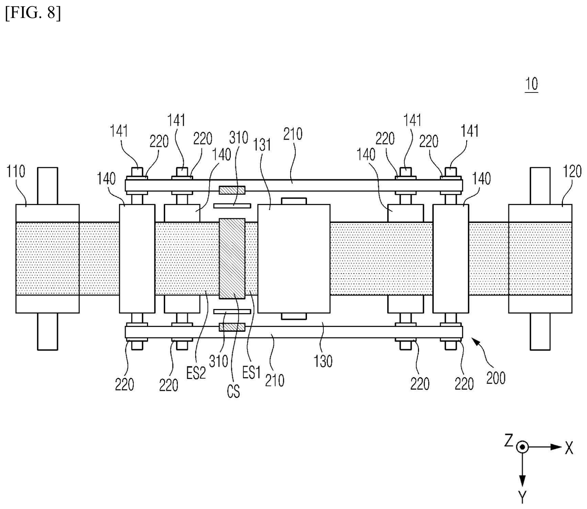

Referring to FIG. 8, the connection sheet CS is separated from the conveyor belt 210 (S160).

In operation S160, two parts may be cut off from the connection sheet CS to separate the connection sheet CS from a pair of conveyor belts 210. The connection sheet CS may be cut by a cutter 310. The cutter 310 may be configured to be moved while being connected to an actuator. When the connection sheet CS is cut, the connection sheet CS connecting the first part ES1 and the second part ES2 of the electrode sheet ES may be separated from the conveyor belt 210. As the connection sheet CS is separated from the conveyor belt 210, the electrode sheet ES including the connection sheet CS may be moved independently of the movement of the conveyor belt 210. That is, the electrode sheet ES including the connection sheet CS is movable regardless of the movement of the conveyor belt 210.

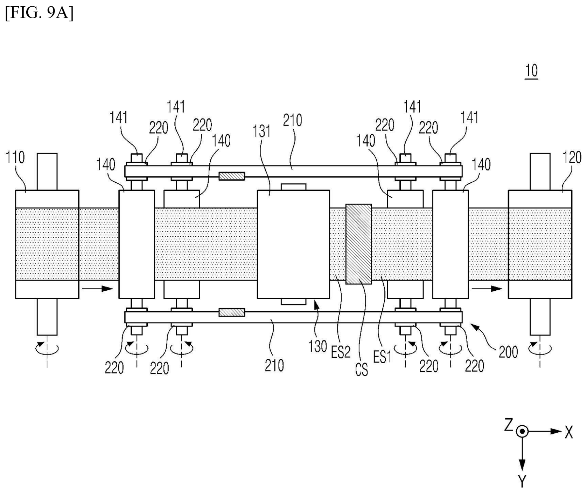

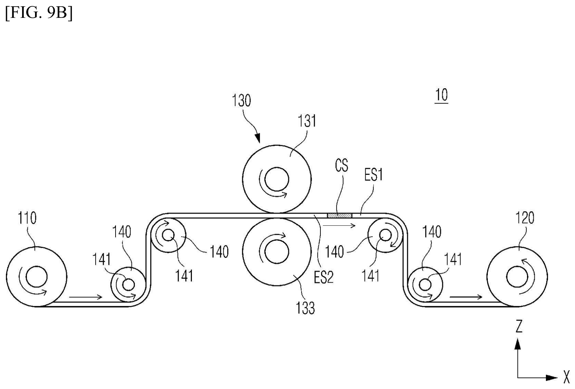

Referring to FIGS. 9A and 9B, after the performance of the rework work on the electrode sheet ES is completed, the rolling process is performed on the electrode sheet ES including the connection sheet CS (S200).

In operation S200, before moving the electrode sheet ES using the unwinder 110 and the rewinder 120, the rolling gap between the upper rolling roll 131 and the lower rolling roll 133 may be adjusted to a gap suitable for performing the rolling process. That is, the rolling device 130 may adjust the rolling gap from the second gap G2 of FIG. 5 for performing the rework operation on the electrode sheet ES to the first gap G1 of FIG. 4C for performing the rolling process on the electrode sheet ES. After the rolling gap is adjusted, the electrode sheet ES may be moved forward using the unwinder 110 and the rewinder 120, and the rolling process may be performed on the electrode sheet ES using the rolling device 130.

As a comparative example, the rework operation may be performed on the electrode sheet ES manually by an operator. In this case, the operator's safety accident is likely to occur, and an equipment operation rate may be reduced by a time required to perform the rework operation on the electrode sheet ES.

According to example embodiments of the present invention, the rework operation performed on the electrode sheet ES to connect two parts of the electrode sheet ES, which are separated from each other due to the breakage of the electrode sheet ES, by the connection sheet CS may be automated. By automating the rework operation for the electrode sheet ES, it is possible to prevent an operator's safety accident and improve the productivity of an electrode manufacturing process including the rework operation on the electrode sheet ES.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. An electrode manufacturing apparatus comprising:
an unwinder around which an electrode sheet is wound;
a rewinder configured to recover and wind the electrode sheet;
a plurality of guide rolls configured to guide the electrode sheet to be moved between the unwinder and the rewinder;
a rolling device provided between the unwinder and the rewinder, and including an upper rolling roll and a lower rolling roll that are configured to roll the electrode sheet; and
a conveyor transfer device configured to move a connection sheet attached to one of two parts of the electrode sheet that are separated from each other,
wherein the conveyor transfer device is configured to move the connection sheet through a rolling gap between the upper rolling roll and the lower rolling roll.

2. The electrode manufacturing apparatus of claim 1, wherein
the conveyor transfer device comprises:
a plurality of conveyor rolls; and
a conveyor belt configured to be moved while being guided by the plurality of conveyor rolls,
wherein the connection sheet is attached to the conveyor belt, and
the connection sheet is moved together with the part of the electrode sheet attached to the connection sheet during the movement of the conveyor belt.

3. The electrode manufacturing apparatus of claim 2, wherein
the plurality of conveyor rolls are installed on rotation shafts of the plurality of guide rolls.

4. The electrode manufacturing apparatus of claim 3, wherein
each of the plurality of conveyor rolls is configured to rotate independently of a rotation of a rotation shaft of a corresponding guide roll among the plurality of guide rolls.

5. The electrode manufacturing apparatus of claim 3, wherein
each of the plurality of conveyor rolls is installed on a side of a rotation shaft of a corresponding guide roll among the plurality of guide rolls.

6. The electrode manufacturing apparatus of claim 3, wherein
the plurality of guide rolls comprise at least one guide roll between the unwinder and the rolling device and at least one guide roll between the rewinder and the rolling device.

7. The electrode manufacturing apparatus of claim 2, wherein
the conveyor transfer device further comprises a driving pulley configured to move the conveyor belt.

8. The electrode manufacturing apparatus of claim 2, further comprising
a cutter configured to cut the connection sheet to separate the connection sheet from the conveyor belt.

9. The electrode manufacturing apparatus of claim 1, wherein
the rolling device is configured to move at least one of the upper rolling roll and the lower rolling roll to adjust the rolling gap.

10. The electrode manufacturing apparatus of claim 9, wherein
the rolling device is configured to adjust the rolling gap to be in a range between a first gap for pressing the electrode sheet by the upper and lower rolling rolls and a second gap greater than the first gap,
wherein the rolling device maintains the rolling gap to be the second gap while the connection sheet is moved through the rolling gap by the conveyor transfer device.

11. An electrode manufacturing method comprising:
performing a rework operation to connect a first part and a second part of an electrode sheet, which are separated from each other, by a connection sheet; and
rolling the electrode sheet by moving the electrode sheet including the connection sheet through a rolling gap between an upper rolling roll and a lower rolling roll,
wherein the performing of the rework operation comprises attaching the connection sheet to the first part of the electrode sheet and a conveyor belt and moving the conveyor belt to move the connection sheet through the rolling gap.

12. The electrode manufacturing method of claim 11, wherein, after the moving of the connection sheet,
the performing of the rework operation further comprises:
attaching the connection sheet to the second part of the electrode sheet; and
separating the connection sheet from the conveyor belt.

13. The electrode manufacturing method of claim 11, wherein, before the moving of the connection sheet,
the performing of the rework operation further comprises increasing the rolling gap from a first gap to a second gap, wherein the second gap is greater than a thickness of the connection sheet.

14. The electrode manufacturing method of claim 13, wherein
the rolling of the electrode sheet comprises adjusting the rolling gap from the second gap to the first gap.

15. The electrode manufacturing method of claim 11, wherein
the electrode sheet is configured to be moved while being guided by a plurality of guide rolls between an unwinder and a rewinder,
a plurality of conveyor rolls configured to guide movement of the conveyor belt are installed on rotation shafts of the plurality of guide rolls, and
each of the plurality of conveyor rolls is configured to rotate independently of a rotation of a rotation shaft of a corresponding guide roll among the plurality of guide rolls.
